# EUROPÄISCHE PATENTSCHRIFT

(11) **EP 1 710 434 B1**
(45) Veröffentlichungstag und Bekanntmachung des Hinweises auf die Patenterteilung: **19.10.2016**
(21) Anmeldenummer: 05024018.3
(22) Anmeldetag: 03.11.2005
(51) Int. Cl.: F04B 23/02, F04B 53/00, F16F 15/08

(54) **Kompaktpumpen-Baugruppe und Hydroaggregat**
Compact hydraulic pumping unit
Groupe de pompage hydraulique compact

(30) Priorität: 08.04.2005 DE 202005005623 U
(43) Veröffentlichungstag der Anmeldung: 11.10.2006
(73) Patentinhaber: HAWE Hydraulik SE, 81673 München (DE)
(72) Erfinder: Neumair, Georg, 85402 Thalhausen (DE); Kuhlen, Christian, 85608 Aschheim (DE)
(74) Vertreter: Grünecker Patent- und Rechtsanwälte PartG mbB

(56) Entgegenhaltungen:
- US-A- 2 261 915
- US-A- 3 570 722
- US-A- 4 104 007
- US-A- 4 917 573
- US-A- 5 725 361

## Beschreibung

Die Erfindung betrifft eine Kompaktpumpen-Baugruppe gemäß Oberbegriff des Anspruchs 1.

Aus der Praxis und den Druckschriften D 7200 H (Hydroaggregat Typ MP) "Kompakt-Pumpenaggregate Typ MP" und D 7200 "Kompakt-Pumpen Typ MP" der Firma HAWE Hydraulik Heilmeier & Weinlein, Streitfeldstraße 25, 81673 München vom Februar 2000-02 und Januar 2000 sind betriebsbereit komplettierte Hydroaggregate jeweils aus einer Grundeinheit bzw. der Kompaktpumpen-Baugruppe, dem Deckel und dem Ölbehälter sowie Grundeinheiten nur aus der Kompaktpumpen-Baugruppe ohne den Ölbehälter bekannt, bei denen der Unteröl-Elektromotor ein verripptes Außengehäuse aufweist, das über Flacheisen-Streben an der Unterseite des Deckels befestigt und positioniert ist. Um den Umfang des Motorgehäuses sind mehrere Flacheisen-Streben verteilt, deren jede über eine abgedichtete Spannschraube direkt gegen die Unterseite des Deckels gespannt ist. Der Deckel ist eine ebene Stahlplatte, auf der der Anschlussblock und der Klemmenkasten mit Schraubbefestigungen festgelegt sind. Im Hydroaggregat steht der Deckel an zumindest zwei Enden über den Rand des Ölbehälters vor, um das Hydroaggregat festlegen zu können. Der Ölbehälter ist quaderförmig und hat einen ebenen Boden. Zur Abdichtung zwischen dem Ölbehälter und dem Deckel sind zwei Lagen eines aus papierartigem Material bestehenden Dichtrahmens vorgesehen. Es ist sowohl ein Einkreissystem mit Hochdruck-Radialpumpen-und/oder Zahnradpumpenelementen als auch ein Zweikreissystem üblich. Der Anschlussblock ist mit dem jeweiligen Druckauslass eines oder mehrerer Pumpenelemente über eine starre Verrohrung verbunden. Der Aufbau des Hydroaggregats wie auch der Kompaktpumpen-Baugruppe ist vielteilig und montagetechnisch aufwendig. Die mechanisch starre Verbindung zwischen der Tragstruktur und dem Deckel und auch die mechanisch starre Verrohrung zwischen dem jeweiligen Druckauslass und dem Anschlussblock resultiert in unerwünschter Körperschallübertragung mit gegebenenfalls lautem Betriebsgeräusch. Da das Hydroaggregat bzw. die Kompaktpumpen-Baugruppe für intermittierenden Betrieb ausgelegt sind, treten bei schlagartigem Einund Abschalten starke Stöße auf, die zum Lockern der Tragstruktur oder sogar zum Bruch der Flacheisen-Streben führen können.

Bei dem aus GB 2 000 221 A bekannten Hydroaggregat ist der Elektromotor außen auf dem Deckel festgelegt, während die Pumpenelemente innen im Ölbehälter an der Unterseite des Deckels verschraubt sind. Die Antriebswelle des Motors durchsetzt einen Durchbruch im Deckel. Aufgrund der starren Verbindung zwischen den Pumpenelementen, dem Motor und dem Deckel wird Körperschall und werden Vibrationen auf den Deckel übertragen, die die Verbindungsbereiche hoch belasten.

Bei dem aus DE 32 37 967 A bekannten Hydroaggregat besteht der Ölbehälter aus einer Bodenplatte und einer darauf stehenden, zweiteiligen Haube. Der gesamte Ölbehälter ist mit einer Wärmeisolierung verkleidet. Der Unteröl-Elektromotor mit dem wenigstens einem Pumpenelement ist über Standfüße mit der Grundplatte verbunden. Betriebsbedingte Vibrationen werden direkt in die Grundplatte übertragen und führen zu hohen lokalen Belastungen.

Bei einer Brennstoffpumpen-Baugruppe gemäß US 2 261 915 A sind die Säulen der im Behälter angeordneten Pumpe über Gummilager gegenüber dem Deckel des Behälters entkoppelt. Die Gummilager bestehen aus Ringscheibenpaaren, die mit äußeren Druckscheiben gegen den Deckel gepresst und innen von einem Hülsenkörper durchsetzt sind.

Bei einem aus US 3 570 722 A bekannten Hydraulikpumpenaggregat sind die Tragstruktur der im Behälter untergebrachten Pumpe wie auch die Saug- und Druckleitungen gegenüber dem Deckel über elastische Elemente entkoppelt. Die elastischen Elemente sind entweder hutförmig oder ringförmig.

In einer aus US 4 917 573 A bekannten Gebläseradlagerung ist eine Scheibe des Gebläserads mit axialen Spannschrauben an einem Antriebswellenende montiert. Jede Spannschraube spannt zwei Metall-Unterlegscheiben gegen eine Metall-Distanzhülse, die eine Übermaßbohrung der Scheibe durchsetzt. Zwischen die Unterlegscheiben und die Scheibe sind axial komprimierte Elastomer-Ringe eingesetzt.

Der Erfindung liegt die Aufgabe zugrunde, eine Kompaktpumpen-Baugruppe der eingangs genannten Art anzugeben, die sich durch ein geringes Laufgeräusch und hohe Betriebssicherheit auszeichnet. Teil der Aufgabe ist es ferner, ein Konzept anzugeben, das für mehrere Pumpenelementen- und Motor-Kombinationen und verschiedene Baugrößen die Verwendung möglichst vieler Gleichteile zulässt, um die Herstellungskosten und den Montageaufwand gering zu halten.

Die gestellte Aufgabe wird mit den Merkmalen des Anspruchs 1 gelöst.

Die Kompaktpumpe ist gegenüber dem Deckel des Ölbehälters schwingungsentkoppelt, so dass das wahrnehmbare Betriebsgeräusch reduziert und aus dem Betrieb resultierende Vibrationen weitestgehend elastisch aufgezehrt werden und die Verbindung zwischen dem Deckel und der Kompaktpumpe möglichst wenig belasten. Die Entkopplung mittels des wenigstens einen Entkopplungselements erhöht die Betriebssicherheit, weil die aus den Vibrationen resultierenden Kräfte gemildert und zum großen Teil aufgezehrt werden und den Verbindungsbereich wenig belasten, so dass die Sicherheit gegen Brüche im Verbindungsbereich hoch ist. Für jede Säule der Tragstruktur ist wenigstens ein Entkopplungselement vorgesehen. Daraus resultiert eine stabile Positionierung der Kompaktpumpe und werden die auf den Deckel zu übertragenden Kräfte großflächig verteilt. Jedes Entkopplungselement isteine einstückige oder aus mehreren Einzelteilen zusammengefügte Gummi- und/oder Elastomer-Buchse. Ob eine einstückige oder zusammengesetzte Ausführung verwendet wird, richtet sich nach den Herstellungskosten und der Montierbarkeit der Buchse. Die Buchse weist zweckmäßig einen zylindrischen Hülsenabschnitt und beidendige Außenflansche auf und ist so in den Verbindungsbereich eingesetzt, dass, zumindest unter normalen Betriebszuständen, kein direkter Kontakt zwischen der Tragstruktur und dem Deckel stattfindet. Die Buchse ist in eine Deckelbohrung eingesetzt und innen mit einer Metall-Stützhülse, z.B. aus Stahl, ausgekleidet, durch welche sich die Spannschraube erstreckt, die an der Kompaktpumpe festgelegt ist. Die Spannschraube und die Verschraubung der Spannschraube mit der Kompaktpumpe stützen sich an den entgegengesetzten Enden der Stützhülse ab, und zwar ohne direkten Kontakt mit dem Deckel. Die Buchse wird nur in vorbestimmtem Maß vorgespannt. Dabei ist zur weiteren Aussteifung bei der Positionierung der Kompaktpumpe ein allen Spannschrauben der Säulen gemeinsames Versteifungsblech eingesetzt, das vom Deckel beabstandet ist und das Entkopplungselement mit Vorspannung kontaktiert, wobei sich das Abstandsrohr oder die Verschraubung unter der Spannkraft der Spannschraube am Versteifungsblech abstützt. Das Abstandsrohr kann auf die gewünschte Länge bemessen werden, um den Abstand der Kompaktpumpe vom Deckel einzustellen.

Bei einer alternativen Ausführungsform können auch mehrere O-Ringe mit unterschiedlichen Stärken und/oder Durchmessern als die Einzelteile des Entkopplungselements verwendet werden, die in der Kombination die Buchsenkonfiguration ergeben. Dies ist eine besonders einfache und kostengünstige Lösung.

In jedem Fall übernimmt das Entkopplungselement auch die Abdichtfunktion zwischen dem Inneren des Ölbehälters und dem äußeren des Deckels.

Um die Tragstruktur weiter auszusteifen, kann zwischen dem einen Ende der Stützhülse und der Verschraubung mit der Kompaktpumpe ein Abstandsrohr vorgesehen sein, das von der Spannschraube durchsetzt wird und sich anstelle der Verschraubung am innenliegenden Ende der Stützhülse abstützt.

Bei einer bevorzugten Ausführungsform umfasst die Kompaktpumpe einen mit freiliegendem Stator und freiliegenden Windungen offen gestalteten Elektromotor und an beiden Enden des Stators angeordneten, miteinander verspannten Lagerschilden. Die Lagerschilde sind zweckmäßigerweise Aluminium-Kokillengussteile, die mit großer Formvielfalt kostengünstig und maßgenau hergestellt werden können. An zumindest einem Lagerschild wird oben und/oder unten wenigstens ein Pumpenelement montiert, das vom Elektromotor antreibbar ist. Zweckmäßig wird jede Verschraubung für eine Spannschraube von einem an einem Lagerschild angeformten Lagerbock mit einer Gewindebohrung gebildet. Für unterschiedliche Leistungsstufen können unterschiedlich lange Statorpakete und unterschiedlich lange Wicklungen, jeweils mit den gleichen Außendurchmessern, unter Verwendung der gleichen Lagerschilde benutzt werden. Auf diese Weise lassen sich mit möglichst vielen Gleichteilen verschiedene Ausführungsvarianten montagetechnisch günstig erstellen.

Bei einer zweckmäßigen Ausführungsform, die mit einem oberen oder einem unteren oder mit oberen und unteren Zahnrad-Pumpenelementen für Niederdruck oder Mitteldruck-Einsatzfälle ausgestattet wird, sind die beiden Lagerschilde baugleich, zweckmäßig sogar identisch und spiegelbildlich angeordnet. Die Lagerschilde passen einerseits zur Tragstruktur und andererseits zu unterschiedlichen Typen von Zahnrad-Pumpenelementen. Beim unteren Lagerschild können sogar die Lagerböcke und Gewindebohrungen, die beim oberen Lagerschild für die Tragstruktur benutzt werden, zum Montieren eines großen Typs eines Zahnrad-Pumpenelementes benutzt werden. Mit gleichen Lagerschilden lassen sich so unterschiedliche Baugrößen von Motoren und bezüglich des Abstands der Kompaktpumpe vom Deckel unterschiedliche Tragstrukturen erstellen.

Bei einer alternativen Ausführungsform, bei der am unteren Lagerschild Hochdruck-Radialpumpenelemente montiert werden, ist der untere Lagerschild verschieden vom oberen Lagerschild. Der obere Lagerschild ist im Hinblick auf die Tragstruktur gestaltet, und auch zur fallweisen Montage eines Zahnrad-Pumpenelementes. Der untere Lagerschild dient hingegen als Schraubträger für wenigstens ein Hochdruck-Radialpumpenelement.

Nach einem weiteren, wichtigen Gedanken ist der Druckanschluss jedes Pumpenelements oder mehrerer Pumpenelemente einer Gruppe über einen flexiblen Hochdruck-Schlauch mit einem im Deckel integrierten Anschlussblock so verbunden, dass auch hier eine Schwingungsentkopplung gegen Druckstöße aus dem Betrieb des oder der Pumpenelemente erzielt wird. Dadurch lässt sich das außen wahrnehmbare Betriebsgeräusch weiter reduzieren, und werden durch die Druckstöße im Betrieb keine Schwingungen oder Vibrationen in den Deckel eingeleitet.

Der Deckel ist zweckmäßig ein Leichtmetallgussteil, vorzugsweise ein Aluminium-Kokillengussteil, der gusstechnisch bereits auf die endgültige Ausstattung der Kompaktpumpen-Baugruppe bzw. des Hydroaggregats vorbereitet ist, zweckmäßig mit einem in den Deckel integrierten Anschlussblock und mit einem integrierten Klemmenkasten-Sitz. Dies hat montagetechnische Vorteile und spart zusätzliche Abdicht- und Befestigungsstellen ein.

Im Sitz kann bereits gusstechnisch zumindest eine Aufnahmedurchführung für einen Schwimmer- und/oder Temperaturschalter vorgesehen oder grob vorgeformt sein. Dies spart Bearbeitungsaufwand für den Fall, dass ein Schwimmer- und/oder Temperaturschalter eingegliedert und im Klemmenkasten angeschlossen wird.

Nach einem weiteren, zweckmäßigen Gedanken ist in der Unterseite des Deckels eine umlaufende Dichtungsnut für eine Dichtung vorgesehen, vorzugsweise eine bereits gusstechnisch integrierte, etwa halbrunde Nut im den Deckel bildenden Gussteil. Auch diese Maßnahme spart nachträgliche Bearbeitungsschritte ein.

Hierbei ist es zweckmäßig, wenn in der Kompaktpumpen-Baugruppe bereits eine in der Dichtungsnut vorgesehene Permanent-Dichtung vorhanden ist, die kostengünstig eingespritzt wird und beim Verfestigen bleibend anhaftet. Als Dichtung eignet sich z.B. ein aufschäumbares oder vernetzbares Polyurethan-Material. Die Kompaktpumpen-Baugruppe wird zweckmäßig mit dem Deckel und der Dichtung geliefert und kann vom Endverbraucher in einem maßgefertigten Ölbehälter installiert werden. Alternativ wird die Kompaktpumpen-Baugruppe im Hydroaggregat mit dem herstellerseitig vorgesehen Ölbehälter verbunden.

Da die Ausbildung des Deckels als Gussteil eine hohe Formvielfalt ermöglicht, wird zweckmäßig der Außenflansch der das Entkopplungselement bildenden Buchse durch einen Ringflansch im Deckel von außen und durch eine unter den Kopf der Spannschraube gelegte oder am Kopf angeformte Scheibe oben abgeschirmt, wobei jedoch zwischen der Scheibe und dem Ringflansch im Normalbetrieb kein metallischer Kontakt herrscht. Diese Abschirmung erhöht die Betriebssicherheit, weil das Gummi- oder Elastomermaterial der Buchse gegen Witterungs- und UV-Strahleneinflüsse weitestgehend geschützt ist, und auch gegen Beschädigungen durch Hochdruck-Reinigungsstrahlen.

Zweckmäßig ist der Ölbehälter aus zwei Stirnwand-Blechteilen und einem Zwischen-Blechkantteil als Schweiß- oder Lötkonstruktion zusammengesetzt. Der Zwischen-Blechkantteil bil-V-förmigen Behältergrund. An den Stirnwand-Blechteilen und/oder am Zwischen-Blechkantteil sind ferner unterseitige Befestigungsfüße vorgesehen, mit denen das Hydroaggregat auf den Boden gestellt und dort festgelegt werden kann, oder auf entsprechenden Befestigungseinrichtungen montierbar ist. Die Entkopplungselemente, die die Kompaktpumpe im Ölbehälter gegenüber dem Deckel entkoppeln und nach außen abdichten können zusammen mit der Kompaktpumpe und deren Zubehör schon am Deckel in einer vorfertigbaren Unterbaugruppe montiert sein. Da keine direkte metallische Körperschallübertragung stattfindet, zeichnet sich das Hydroaggregat durch ein leises Betriebsgeräusch aus.

Der konkav gerundete oder V-förmige Behältergrund ermöglicht es, den Ölbehälter über den optimal tief platzierten Ölablass zumindest weitestgehend zu entleeren.

Anhand der Zeichnungen werden Ausführungsformen des Erfindungsgegenstandes erläutert. Es zeigen:
- Fig. 1: eine Perspektivansicht einer Ausführungsform einer Kompaktpumpen-Baugruppe für ein Hydroaggregat,
- Fig. 2: eine Seitenansicht der Kompaktpumpen-Baugruppe von Fig. 1, in Fig. von links,
- Fig. 3: einen Schnitt in der Schnittebene III - III von Fig. 2 einer Tragstruktur,
- Fig. 4: eine Perspektivansicht eines Hydroaggregats mit installierter Kompaktpumpen-Baugruppe gemäß Fig. 1,
- Fig. 5: eine Perspektivansicht einer anderen Ausführungsform einer Kompaktpumpen-Baugruppe,
- Fig. 6: eine Perspektivansicht einer weiteren Ausführungsform einer Kompaktpumpen-Baugruppe, und
- Fig. 7: einen vergrößerten Schnitt ähnlich dem von Fig. 3.

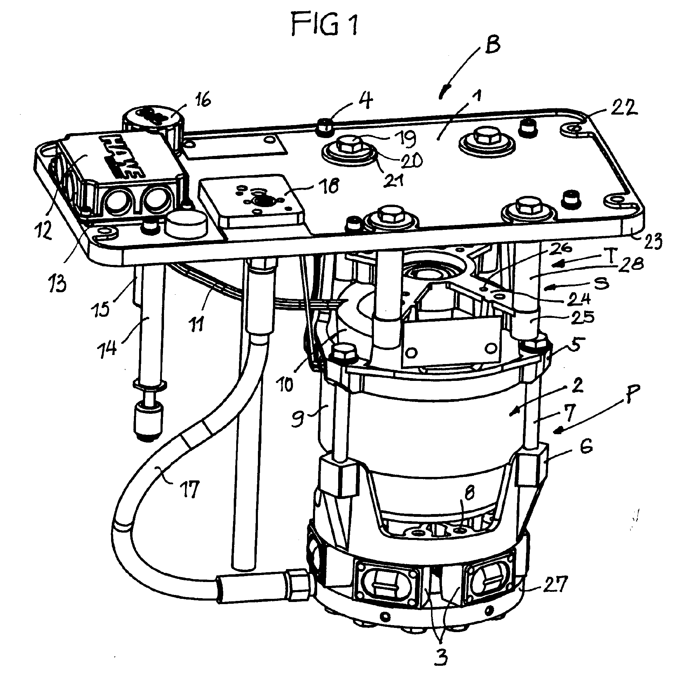

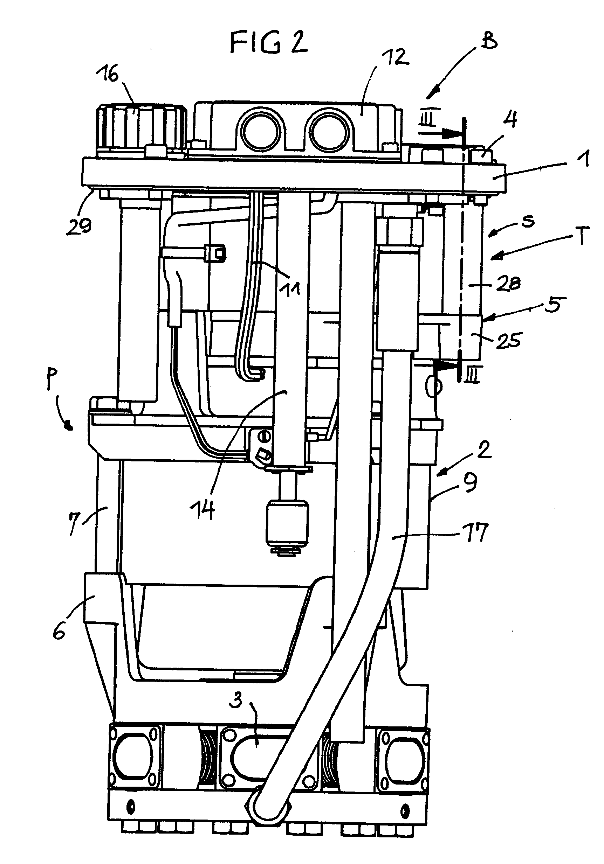

Eine Kompaktpumpen-Baugruppe B in den Fig. 1 und 2 weist als Hauptkomponenten einen Deckel 1 und eine über eine Tragstruktur T unterhalb der Unterseite des Deckels 1 positionierte und festgelegte Kompaktpumpe P auf. Der Deckel 1 ist ein Leichtmetall-Gussteil, zweckmäßig ein Aluminium-Kokillengussteil, in den bestimmte Funktionsmerkmale bereits gusstechnisch integriert sind.

Die Kompaktpumpe P besteht aus einem Unteröl-Elektromotor 2 und wenigstens einem an diesem befestigten und von diesem angetriebenen Pumpenelement 3. In der Ausführungsform in den Fig. 1 und 2 sind mehrere um die Achse des Elektromotors 2 verteilte Hochdruck-Radialpumpenelemente 3 als Gruppe zusammengefasst an der Unterseite der Kompaktpumpe P montiert. Die Tragstruktur T umfasst mehrere um die Achse der Kompaktpumpe P verteilte, beispielsweise vier, Säulen S, mit denen die Kompaktpumpe am Deckel 1 positioniert ist. Im Deckel 1 sind Befestigungsschrauben 4 gezeigt, die abgedichtet sind und zum Festlegen des Deckels 1 auf einem später erläuterten Ölbehälter dienen.

Der Unteröl-Elektromotor 2 ist offen mit einem freiliegenden Stator 9 ausgebildet, der einen nicht näher hervorgehobenen Rotor mit einer Rotorwelle enthält, die z.B. in oberen und unteren Lagerschilden 5, 6 gelagert ist. Die Lagerschilde 5, 6 sind zweckmäßig ebenfalls Aluminium-Kokillengussteile und gusstechnisch auf mehrere Funktionen ausgelegt. Die beiden Lagerschilde 5, 6 werden durch Spannschrauben 7 gegeneinander am Stator 9 verspannt. Die Radial-Pumpenelemente 3 sind in Befestigungsbohrungen 8 des unteren Lagerschilds 6 festgelegt, der als Schraubträger dient.

Der obere Lagerschild 5 umfasst die Wicklung 10, die über ein Kabel 11 und eine nichtgezeigte Durchführung im Deckel 1 in einem Klemmenkasten 12 angeschlossen ist, der in einem gusstechnisch im Deckel 1 vorbereiteten Sitz 13 festgeschraubt ist. In dem Sitz 13 sind nicht näher hervorgehobene Aufnahmeöffnungen beispielsweise für einen Schwimmerschalter 14 und/oder einen nicht-gezeigten Temperaturschalter gegebenenfalls bereits gusstechnisch vorgeformt. Der Schalter 14 wird in dem Klemmenkasten 12 angeschlossen. Ferner ist auf dem Deckel 1 eine Kappe 16 eines Oleinfüllrohres 15 angebracht und ist ein Anschlussblock 18 gusstechnisch in den Deckel 1 integriert. Mit den Radial-Pumpenelementen 3 ist eine Sammelscheibe 27 verschraubt, deren Druckauslass über einen flexiblen Hochdruck-Schlauch 17 an den Anschlussblock 18 angeschlossen ist.

Jede Säule S der Tragstruktur T weist eine von der Oberseite des Deckels 1 eingeführte Spannschraube 19, eine unter den Kopf der Spannschraube 19 gelegte oder am Kopf angeformte Scheibe 20 und einen gusstechnisch am Deckel 1 vorgeformten Ringflansch 21 auf, dessen Zweck später erläutert wird. Mit Öffnungen 22 lässt sich der Deckel 1 (bzw. das Hydroaggregat selbst) an Befestigungseinrichtungen abstützen, beispielsweise mittels Endüberständen 23 des Deckels 1.

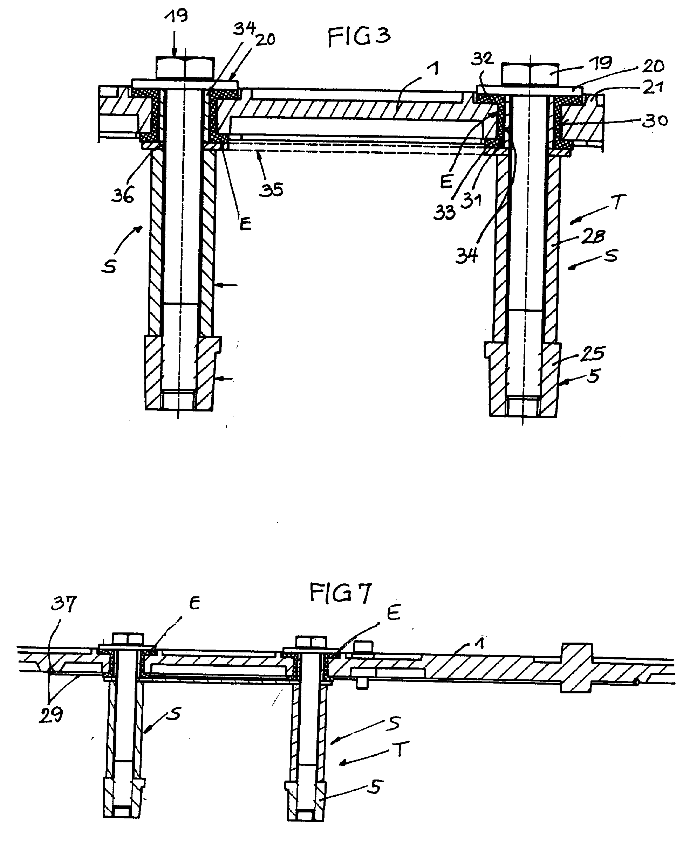

Der obere Lagerschild 5 ist mit mehreren Radialrippen 24 ausgebildet, in die als Verschraubung für jede Spannschraube 19 jeweils ein außenliegender Lagerbock 25 integriert ist. Gewindebohrungen 26 in den Radialrippen 24 bilden ein Lochbild für unterschiedliche Größen von auf dem Lagerschild 25 montierbaren Pumpenelementen, beispielsweise unterschiedlich großen Zahnrad-Pumpenelementen (in den Fig. 1 und 2 nicht gezeigt). Zwischen den Lagerböcken 25 und der Unterseite des Deckels 1 (im Detail aus den Fig. 3 und 7 ersichtlich) erstrecken sich Abstandsrohre 28, z.B. aus Stahl, in denen die Spannschrauben 19 angeordnet sind.

Fig. 2 verdeutlicht eine in der Unterseite des Deckels 1 angeordnete Dichtung 29, die zweckmäßig eine Permanentdichtung und Teil der Kompaktpumpen-Baugruppe B ist. Beispielsweise zeigt Fig. 7 eine gegebenenfalls bereits gusstechnisch in der Unterseite des Deckels 1 geformte, kontinuierliche Dichtungsnut 37, etwa halbrunder Form, in die die Dichtung 29 eingebracht ist. Die Dichtung 29 kann beispielsweise aus pastösem Material, z.B. Polyurethan-Material in die Dichtungsnut 37 eingespritzt sein, so dass sie nach Aushärten oder Aufschäumen haftet und für die Abdichtung nach der Montage der Kompaktpumpen-Baugruppe B auf dem Ölbehälter nutzbar ist.

In der Tragstruktur T ist für jede Säule S im Deckel 1 ein elastisches Entkopplungselement E vorgesehen, das in eine Deckelbohrung 30 eingesetzt ist. Bei der gezeigten Ausführungsform in den Fig. 3 und 7 ist das Entkopplungselement E eine einstückige Gummi- und/oder Elastomerbuchse mit einem zylindrischen Hülsenteil 31 und beidendigen Außenflanschen 32, 33. Der Außenflansch 32 kann einen größeren Außendurchmesser aufweisen als der Außenflansch 33. Der Außenflansch 32 wird durch die Scheibe 20 und den Ringflansch 21 nach außen abgeschirmt.

Bei einer nicht-gezeigten Ausführungsform könnte die Buchse auch aus Einzelteilen, beispielsweise den beiden dann kreisringförmigen Außenflanschen 33, 32 und dem Hülsenabschnitt 31 zusammengefügt sein, oder aus dem mit einem Außenflansch 32 oder 33 einstückig ausgebildeten Hülsenabschnitt 31 und einer den anderen Außenflansch bildenden Kreisringscheibe.

Bei einer weiteren, nicht-gezeigten Ausführungsform könnten als Entkopplungselement E mehrere O-Ringe unterschiedlicher Durchmesser und/oder Stärken verwendet sein, die in der Kombination die Hülsenteil- und Außenflansch-Konfiguration der Buchse bilden. In jedem Fall verhindert das Entkopplungselement einen direkten metallischen Kontakt bei Normalbetrieb, um eine Schwingungsentkopplung zwischen der Kompaktpumpe P und dem Deckel 1 zu erzielen.

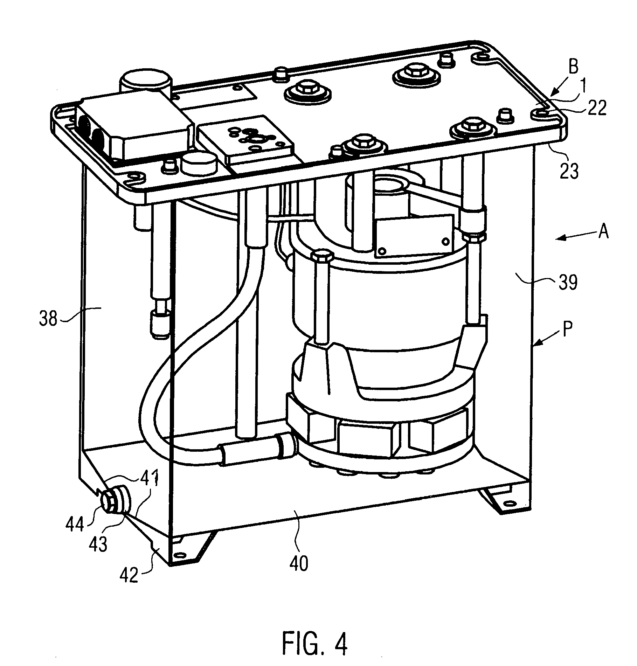

In der das Entkopplungselement E bildenden Buchse ist in den Fig. 3 und 4 innen eine beispielsweise aus Stahl bestehende Stützhülse 34 enthalten, die von der Spannschraube 19 durchsetzt wird. Allen Säulen S ist bei der gezeigten Ausführungsform eine gemeinsame Versteifungsplatte 35, z.B. aus Stahl, zugeordnet, die die Spannschrauben 19 in Bohrungen 36 durchsetzen und die mit Vorspanndruck auf den Außenflanschen 33 und mit mechanischem Kontakt auf den unteren Enden der Stützhülsen 34 aufsteht. Jedes Abstandsrohr 28 liegt an der Unterseite der Versteifungsplatte 35 an. Der Lagerbock 25 steht am unteren Ende des Abstandsrohrs 28 an.

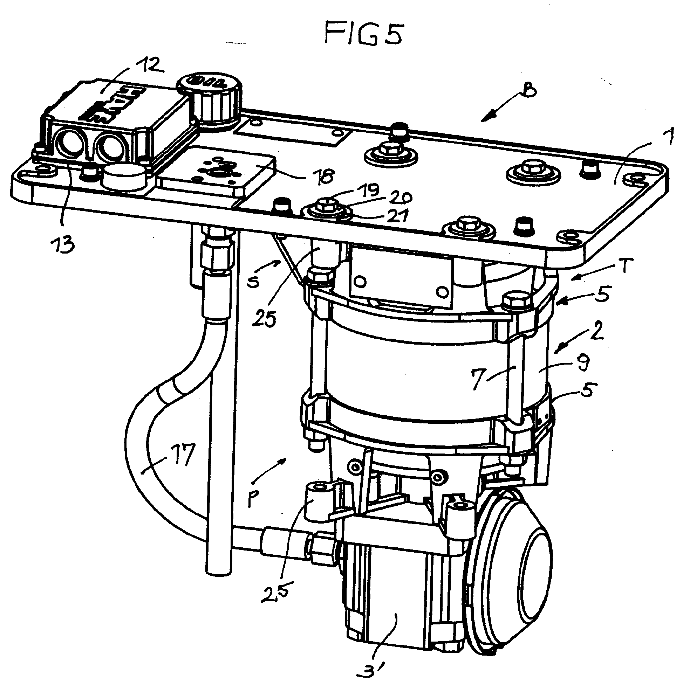

Bei der in Fig. 5 gezeigten Ausführungsform der Kompaktpumpen-Baugruppe B sind die Lagerböcke 25 des Lagerschilds 5 direkt an die Versteifungsplatte 35 angesetzt, oder, falls die Kompaktpumpe P noch weiter an die Unterseite des Deckels 1 gesetzt werden sollte, direkt an die unteren Enden der Stützhülsen 36.

In Fig. 4 ist die Kompaktpumpen-Baugruppe B von Fig. 1 bis 3 in ein Hydroaggregat A eingegliedert, das einen beispielsweise aus Blech bestehenden Ölbehälter D aufweist, der von dem Deckel 1 mittels der Dichtung 29 (siehe Fig. 7) dicht verschlossen wird.

Der Ölbehälter D besteht aus zwei im Wesentlichen ebenen Seitenwandteilen 38, 39 und einem dazwischen eingesetzten, im Querschnitt annähernd U-förmigen Zwischen-Blechkantteil 40. Diese Komponenten sind entlang ihrer Ränder miteinander verschweißt oder verlötet. Der Zwischen-Blechkantteil 40 definiert einen U-förmig konkaven, nicht-gezeigten (oder V-förmigen) Behältergrund 41. An den Seitenwand-Blechteilen 38 sind unten Befestigungsfüße 42 angeformt. Ein Ölablass 43 ist an der tiefsten Stelle des Behältergrundes 41 zumindest in einem Seitenwand-Blechteil 38 vorgesehen, und durch eine Ölablassschraube 44 verschlossen. Mit den Überständen 23 und den Befestigungsbohrungen 22 lässt sich das Hydroaggregat A im Bereich des Deckels 1 festlegen, und/oder mit den Befestigungsfüßen 42, die auch zum Aufstellen des Hydroaggregats A nutzbar sind.

In der Ausführungsform der Kompaktpumpen-Baugruppe B in Fig. 5 sind im Unterschied zu Fig. 1, 2 und 4 zwei baugleiche Lagerschilde 5 spiegelbildlich zueinander am Stator 9 des Unteröl-Elektromotors 2 angebracht. Die Lagerböcke 25 des oberen Lagerschilds 5 sind mit den Spannschrauben 19 in der gegenüber dem Deckel entkoppelten Tragstruktur T, wie erwähnt, entweder direkt an die Versteifungsplatte 35 angesetzt, oder unter Weglassung der Versteifungsplatte 35 direkt an die unteren Enden der Stützhülsen 34. An den in Fig. 5 nicht sichtbaren Gewindebohrungen 26 des unteren Lagerschilds 5 ist in Fig. 5 ein Zahnrad-Pumpenelement 3' montiert, das über den flexiblen Hochdruck-Schlauch 17 mit dem Anschlussblock 18 im Deckel 1 verbunden ist.

Um unterschiedlich leistungsfähige Unteröl-Elektromotoren 2 erstellen zu können, werden unterschiedlich lange Statoren bzw. Statorpakete gleicher Außendurchmesser mit baugleichen Lagerschilden 5, 5 oder 5, 6 verwendet, und entsprechend lange Wicklungen und Rotoren mit Rotorwellen. Der Lagerschild 5 ermöglicht auch die wahlweise Anbringung eines kleineren Zahnrad-Pumpenelementes 3' unter Nutzen des Bohrungsbildes der Gewindebohrungen 26. Eine große Baugröße eines Zahnrad-Pumpenelementes 3' könnte auch an den außenliegenden Lagerböcken 25 des unteren Lagerschilds 5 montiert werden, welche Lagerböcke 25 beim oberen Lagerschild 5 zur Verbindung mit dem Deckel 1 genutzt werden.

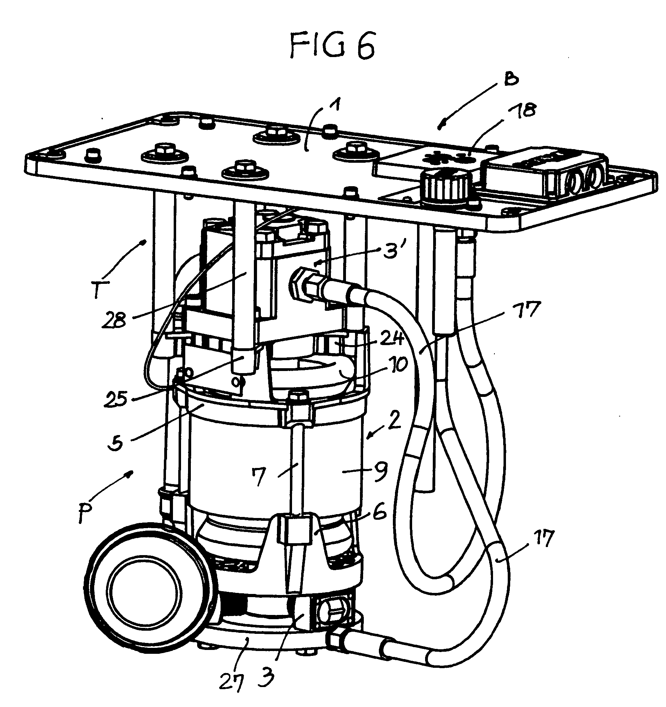

In der Ausführungsform der Kompaktpumpen-Baugruppe B in Fig. 6 sind in der gegenüber dem Deckel entkoppelten Tragstruktur T gegenüber den anderen Ausführungsformen längere Abstandsrohre 28 zwischen den Lagerböcken 25 und dem Deckel 1 bzw. der Versteifungsplatte 35 eingesetzt, und entsprechend längere Spannschrauben 19. Auf dem oberen Lagerschild 5 ist ein Zahnrad-Pumpenelement 3' montiert, das über den flexiblen Hochdruck-Schlauch 17 mit dem Anschlussblock 18 verbunden ist. Am unteren Lagerschild 6, der dem Lagerschild 6 der Fig. 1 entspricht, sind mehrere Radial-Pumpenelemente 3 montiert, die über eine Sammelscheibe 27 und den Hochdruck-Schlauch 17 ebenfalls an den Anschlussblock 18 angeschlossen sind (Zweikreissystem).

Es wäre ferner denkbar, anstelle der Radial-Pumpenelemente 3 in Fig. 6 ein weiteres Zahnrad-Pumpenelement 3' (analog zu Fig. 5) am unteren Lagerschild 6 oder an dem anstelle des Lagerschilds 6 vorgesehenen Lagerschild 5 zu montieren, oder anstelle des in Fig. 6 oben montierten Zahnrad-Pumpenelements 3' zumindest ein Radial-Pumpenelement 3 auf dem Lagerschild 5 zu montieren, oder auf einem geringfügig modifizierten Lagerschild. Bei einem weiteren, nicht-gezeigten Zweikreissystem könnte(n) unterhalb der Ebene der Radialkolben-Pumpenelemente 3 von Fig. 1 über eine Zwischenplatte ein Zahnrad-Pumpenelement 3' oder weitere Radialkolben-Pumpenelemente 3 montiert sein.

## Patentansprüche

1. Kompaktpumpen-Baugruppe (B) für ein Hydroaggregat (A), mit einem Deckel (1) eines Ölbehälters (D), einer Kompaktpumpe (P) aus einem Elektromotor (2) und wenigstens einem antreibbaren Pumpenelement (3, 3'), die mittels einer mehrere um die Achse der Kompaktpumpe (P) verteilte Säulen (S) aufweisenden Tragstruktur (T) abgedichtet am Deckel (1) positioniert ist, wobei zwischen den Säulen (S) der Tragstruktur (T) und dem Deckel (1) elastische Entkopplungselemente (E) vorgesehen sind, **dadurch gekennzeichnet, dass** jedes Entkopplungselement (E) eine einstückige oder eine aus Einzelteilen zusammengesetzte Gummi- und/oder Elastomer-Buchse ist, die einen zylindrischen Hülsenabschnitt (31) und beidendige Außenflansche (32, 33) umfasst, dass das Entkopplungselement (E) in eine Deckelbohrung (30) eingesetzt ist und eine Metallstützhülse (34) enthält, die von einer an der Kompaktpumpe (P) festgelegten Spannschraube (19) durchsetzt wird, dass sich die Spannschraube (19) und deren Verschraubung mit der Kompaktpumpe (P) in gleichzeitigem Vorspannkontakt mit dem Entkopplungselement (E) und vom Deckel (1) beabstandet an beiden Enden der Stützhülse (34) abstützen, und dass entweder zwischen dem einen Ende der Stützhülse (34) und der Verschraubung mit der Kompaktpumpe (P) oder zwischen dem anderen Ende der Stützhülse (34) und einem die Spannschraube (19) aufnehmenden Abstandsrohr (28) ein allen Spannschrauben (19) der Säulen (S) gemeinsames Versteifungsblech (35) eingesetzt ist, das vom Deckel (1) beabstandet ist und das Entkopplungselement (E) mit Vorspannung kontaktiert.

2. Kompaktpumpen-Baugruppe nach Anspruch 1, **dadurch gekennzeichnet, dass** als Entkopplungselement jeweils mehrere den Hülsenabschnitt (31) und die Außenflansche (32, 33) definierende O-Ringe eingesetzt sind.

3. Kompaktpumpen-Baugruppe nach Anspruch 1, **dadurch gekennzeichnet, dass** die Kompaktpumpe (P) aus einem mit freiliegendem Stator (9) offen gestalteten Unteröl-Elektromotor, an beiden Enden des Stators (9) angeordneten, miteinander verspannten Lagerschilden (5, 6), vorzugsweise Aluminium-Kokillengussteilen, für eine Rotorwelle, und den wenigstens einen an wenigstens einem Lagerschild (5, 6) montierten Pumpenelement (3, 3') zusammengesetzt ist, und dass jede Verschraubung für eine Spannschraube (19) ein an zumindest einem Lagerschild (5, 6) angeformter Lagerbock (25) mit einer Gewindebohrung ist.

4. Kompaktpumpen-Baugruppe nach Anspruch 3, **dadurch gekennzeichnet, dass** beide Lagerschilde (5) baugleich sind, vorzugsweise identisch und spiegelbildlich angeordnet, und dass an den Lagerböcken (25) beider Lagerschilde (5) Montierbohrungen (26) für jeweils ein unteres und/oder ein oberes Zahnrad-Pumpenelement (3') vorgesehen sind.

5. Kompaktpumpen-Baugruppe nach Anspruch 3, **dadurch gekennzeichnet, dass** der der Tragstruktur (T) abgewandet Lagerschild (6) als Schraubträger für wenigstens ein unteres Hochdruck-Radial-Pumpenelement (3) ausgebildet ist.

6. Kompaktpumpen-Baugruppe nach Anspruch 1, **dadurch gekennzeichnet, dass** ein Druckanschluss jedes Pumpenelements (3, 3') oder mehrerer Pumpenelemente (3) einer Gruppe über einen flexiblen Hochdruckschlauch (17) gegenüber einem in den Deckel (1) integrierten Anschlussblock (18) schwingungsentkoppelt ist.

7. Kompaktpumpen-Baugruppe nach Anspruch 1, **dadurch gekennzeichnet, dass** der Deckel (1) ein Leichtmetall-Gussteil, vorzugsweise ein Aluminium-Kokillengussteil, mit in die freie Außenseite gusstechnisch integriertem Anschlussblock (18) und einem gusstechnisch integrierten Klemmenkasten-Sitz (13) ist.

8. Kompaktpumpen-Baugruppe nach Anspruch 7, **dadurch gekennzeichnet, dass** im Klemmenkasten-Sitz (13) wenigstens eine Aufnahmedurchführung für einen Schwimmer- oder/und Temperaturschalter (14) vorgesehen ist.

9. Kompaktpumpen-Baugruppe nach Anspruch 1, **dadurch gekennzeichnet, dass** der Deckel (1) an der Unterseite eine umlaufende Dichtungsnut (37) aufweist, vorzugsweise eine gusstechnisch integrierte, etwa halbrunde Dichtungsnut, und dass eine in die Dichtungsnut (37) selbsthaftend eingespritzte, verfestigte Permanent-Dichtung (29) vorgesehen ist, vorzugsweise aus einem Polyurethan-Material.

10. Kompaktpumpen-Baugruppe nach Anspruch 1, **dadurch gekennzeichnet, dass** der in der freien Außenseite des Deckels (1) platzierte Außenflansch (32) der Buchse durch einen im Deckel vorgesehenen Ringflansch (21) und eine unter einen Kopf der Spannschraube (19) gelegte oder an diesem angeformte Scheibe (20) abgeschirmt ist, und dass das Versteifungsblech (35) am an der Unterseite des Deckels (1) platzierten Außenflansch (33) der Buchse anliegt.

11. Kompaktpumpen-Baugruppe nach Anspruch 1, **dadurch gekennzeichnet, dass** der Ölbehälter (D) aus zwei Stirnwandteilen (38, 39) und einem Zwischen-Bleichkantteil (40) als Schweiß- oder Lötkonstruktion zusammengesetzt ist, wobei der Zwischen-Blechkantteil (40) einen konkav gerundeten oder V-förmigen Behältergrund (41) bildet.

12. Kompaktpumpen-Baugruppe nach Anspruch 11, **dadurch gekennzeichnet, dass** an beiden Stirnwand-Blechteilen (38, 39) unterseitige Befestigungsfüße (42) vorgesehen sind.

13. Kompaktpumpen-Baugruppe nach Anspruch 11, **dadurch gekennzeichnet, dass** in wenigstens einem Stirnwand-Blechteil (38) ein Ölablass (43) in Ausrichtung auf die tiefstliegende Stelle des Behältergrundes (41) vorgesehen ist.

## Claims

1. Compact hydraulic pumping unit (B) for a hydraulic aggregate (A), comprising a cover lid (1) of an oil container (D), a compact hydraulic pump (P) consisting of an electric motor (2) and at least one driveable pump element (3, 3'), the compact pump (P) being positioned by means of a carrying structure (T) comprising several pillars (S) distributed about the axis of the compact pump (P) in sealed fashion at the cover lid (1), wherein elastic decoupling elements (E) are arranged between the pillars (S) of the carrying structure (T) and the cover lid (1), **characterized in that** each decoupling element (E) comprises a unitary rubber and/or elastomer-bushing or a rubber and/or elastomer-bushing combined from single parts, the rubber and/or elastomer-bushing having a cylindrical sleeve section (31) and outer flanges (32, 33) at both ends, that the decoupling element (E) is inserted into a bore (30) of the cover lid and contains a metallic supporting sleeve (34), penetrated by a tensioning screw (19) secured to the compact pump (P), that the tensioning screw (19) and the threaded connection between the tensioning screw (19) and the compact pump (P) are supported with simultaneous preloading contact with the decoupling element (E) and spaced apart from the cover lid (1) at both ends of the supporting sleeve (34), and that a stiffening sheet metal (35) which is common to all tensioning screws (19) of the pillars (S) is inserted either between one end of the supporting sleeve (34) and the threaded connection with the compact pump (P) or between the other end of the supporting sleeve (34) and a spacer tube (28) accommodating the respective tensioning screw (19), and that the stiffening sheet metal (35) is distant from the cover lid (1) and is contacting the decoupling element (E) under pre-load.

2. Compact hydraulic pumping unit according to claim 1, **characterized in that** respectively several O-rings are provided as the decoupling element such that they define the sleeve section (31) and the outer flanges (32, 33).

3. Compact hydraulic pumping unit according to claim 1, **characterized in that** the compact pump (P) is combined of an open-submersible electric motor having an uncovered stator (9), of bearing shields (5, 6), arranged at both ends of the stator (9) and being tensioned to each other, the bearing shields (5, 6) preferably being aluminum-casted parts, for a rotor shaft, and of the at least one pump element (3, 3') mounted at at least one bearing shield (5, 6), and that each threaded connection for a tensioning screw (19) comprises a bearing block (25) including a threaded bore at at least one bearing shield (5, 6).

4. Compact hydraulic pumping unit according to claim 3, **characterized in that** both bearing shields (5) have the same design, preferably are identical and arranged mirror-inverted, and that in the bearing blocks (25) of both bearing shields (5) mounting bores (26) for respectively lower and/or an upper gear wheel-pump element (3') are provided.

5. Compact hydraulic pumping unit according to claim 3, **characterized in that** the bearing shield (6) located remote from the carrying structure (T) is formed as a screw-in carrier for at least one lower high pressure-radial-pump element (3).

6. Compact hydraulic pumping unit according to claim 1, **characterized in that** a pressure port of each pump element (3, 3') or a pressure port of several pump elements (3) of a group of pump elements is decoupled in view of vibrations from a connecting block (18) integrated into the cover lid (1) by a flexible high pressure hose (17).

7. Compact hydraulic pumping unit according to claim 1, **characterized in that** the cover lid (1) is a light metal cast part, preferably an aluminum cast part, which has the connecting block (18) integrated by casting technology into a free outer side, and has a terminal box seat (13) integrated by casting technology.

8. Compact hydraulic pumping unit according to claim 7, **characterized in that** at least one accommodating passage for a floater switch or/and temperature switch (14) is provided in the terminal box seat (13).

9. Compact hydraulic pumping unit according to claim 1, **characterized in that** the cover lid (1) has a circumferentially extending sealing groove (37) at its lower side, preferably a sealing groove of substantially semi-circular cross-section and integrated by casting technology, and that a self-bonding, injected and solidified permanent-sealing (29), preferably of a polyurethane material is provided in the sealing groove (37).

10. Compact hydraulic pumping unit according to claim 1, **characterized in that** the outer flange (32) of the bushing placed in the free outer side of the cover lid (1) is shielded by an annular flange (21) provided in the cover lid and a washer (20) inserted below a head of the tensioning screw (19) or formed at the head of the tensioning screw (19), and that the stiffening sheet metal (35) is resting at the outer flange (33) of the bushing placed at the lower side of the cover lid (1).

11. Compact hydraulic pumping unit according to claim 1, **characterized in that** the oil container (D) is combined of two front wall parts (38, 39) and an intermediate sheet metal bent part (40) in a welded or soldered construction, wherein the intermediate sheet metal bent part (40) defines a concavely rounded or V-shaped container bottom (41).

12. Compact hydraulic pumping unit according to claim 11, **characterized in that** fastening feet (42) are provided at the lower sides of both front wall-sheet metal parts (38, 39).

13. Compact hydraulic pumping unit according to claim 11, **characterized in that** in alignment with the deepest position of the container bottom (41) an oil outlet (43) is provided in at least one front wall-sheet metal part (38).

## Revendications

1. Module de pompe compact (B) pour un groupe hydraulique (A), comprenant un couvercle (1) d'un réservoir d'huile (D), une pompe compacte (P), qui est constituée d'un moteur électrique (2) et d'au moins un élément de pompe (3, 3') pouvant être entraîné, et qui est positionnée de manière étanche sur le couvercle (1) au moyen d'une structure porteuse (T) présentant plusieurs colonnes (S) réparties autour de l'axe de la pompe compacte (P), des éléments de découplage élastiques (E) étant prévus entre les colonnes (S) de la structure porteuse (T) et le couvercle (1),
**caractérisé en ce que** chaque élément de découplage (E) est une douille en caoutchouc et/ou en élastomère, d'un seul tenant ou composée de l'assemblage de parties individuelles, qui comprend un tronçon de douille cylindrique (31) et, aux deux extrémités, des collerettes extérieures (32, 33), **en ce que** l'élément de découplage (E) est placé dans un alésage de couvercle (30) et renferme une douille d'appui métallique (34) traversée par une vis de serrage (19) fixée à la pompe compacte (P), **en ce que** la vis de serrage (19) et sa zone de liaison vissée avec la pompe compacte (P) s'appuient selon un contact de précontrainte simultané avec l'élément de découplage (E) et à distance du couvercle (1), sur les deux extrémités de la douille d'appui (34), et **en ce qu'**entre une extrémité de la douille d'appui (34) et la zone de liaison vissée avec la pompe compacte (P) ou entre l'autre extrémité de la douille d'appui (34) et un tube-entretoise (28) logeant la vis de serrage (19), est insérée une tôle de renfort (35) commune à toutes les vis de serrage (19) des colonnes (S), qui est espacée du couvercle (1) et en contact sous précontrainte, avec l'élément de découplage (E).

2. Module de pompe compact selon la revendication 1, **caractérisé en ce qu'**en guise d'élément de découplage, sont mis en oeuvre plusieurs joints toriques définissant le tronçon de douille (31) et les collerettes extérieures (32, 33)

3. Module de pompe compact selon la revendication 1, **caractérisé en ce que** la pompe compacte (P) est composée d'un moteur électrique immergé ouvert, à stator (9) dégagé, de flasques de palier (5, 6) agencés aux deux extrémités du stator (9) et serrés mutuellement l'un vers l'autre, de préférence des pièces en aluminium moulé en coquille, pour un arbre de rotor, et dudit au moins un élément de pompe (3, 3') monté sur au moins un flasque de palier (5, 6), et **en ce que** chaque zone de liaison vissée pour une vis de serrage (19) est un embout de support (25) avec un trou taraudé, qui est formé sur au moins un flasque de palier (5, 6).

4. Module de pompe compact selon la revendication 3, **caractérisé en ce que** les deux flasques de palier (5) sont de construction identique, de préférence agencés de manière identique et selon une symétrie par réflexion, et **en ce que** sur les embouts de support (25) des deux flasques de palier (5), sont prévus des alésages de montage (26) pour un élément de pompe à engrenages (3') respectivement inférieur et/ou supérieur.

5. Module de pompe compact selon la revendication 3, **caractérisé en ce que** le flasque de palier (6) opposé à celui dirigé vers la structure porteuse (T), est configuré en tant que support de vis pour au moins un élément de pompe radiale haute-pression (3) inférieure.

6. Module de pompe compact selon la revendication 1, **caractérisé en ce qu'**un raccord de branchement de chaque élément de pompe (3, 3') ou de plusieurs éléments de pompe (3) d'un groupe est découplé sur le plan vibratoire, par l'intermédiaire d'un tuyau haute pression flexible (17), par rapport à un bloc de raccord de branchement (18) intégré au couvercle (1).

7. Module de pompe compact selon la revendication 1, **caractérisé en ce que** le couvercle (1) est une pièce moulée en métal ou alliage léger, de préférence une pièce en aluminium moulé en coquille, comprenant un bloc de raccord de branchement (18) intégré par la technique de moulage, dans le côté extérieur libre, et une assise de boitier à bornes (13) également intégrée par la technique de moulage.

8. Module de pompe compact selon la revendication 7, **caractérisé en ce que** dans l'assise de boitier à bornes (13) est prévu au moins un logement de passage pour un commutateur à flotteur ou/et un commutateur de température (14).

9. Module de pompe compact selon la revendication 1, **caractérisé en ce que** le couvercle (1) présente sur le côté inférieur, une rainure de joint d'étanchéité (37) périphérique, de préférence une rainure de joint d'étanchéité environ demi-ronde intégrée par la technique de moulage, et **en ce qu'**il est prévu un joint d'étanchéité permanent (29) injecté dans la rainure de joint d'étanchéité (37) de manière auto-adhésive et solidifié, de préférence en un matériau de polyuréthanne.

10. Module de pompe compact selon la revendication 1, **caractérisé en ce que** la collerette extérieure (32) de la douille, placée dans le côté extérieur libre du couvercle (1), est protégée par une collerette annulaire (21) prévue sur le couvercle et par une rondelle (20) placée sous la tête de la vis de serrage (19) ou formée sur celle-ci, et **en ce que** la tôle de renfort (35) s'appuie sur la collerette extérieure (33) de la douille, placée sur le côté inférieur du couvercle (1).

11. Module de pompe compact selon la revendication 1, **caractérisé en ce que** le réservoir d'huile (D) est composé des deux parties de paroi frontale (38, 39) et d'une partie intermédiaire de tôle pliée (40), sous la forme d'une construction soudée ou brasée, la partie intermédiaire de tôle pliée (40) formant un fond de réservoir (41) arrondi de manière concave ou en forme de V.

12. Module de pompe compact selon la revendication 11, **caractérisé en ce que** sur les deux parties de tôle de paroi frontale (38, 39) sont prévus des pieds de fixation (42) inférieurs.

13. Module de pompe compact selon la revendication 11, **caractérisé en ce que** dans au moins une partie de tôle de paroi frontale (38) est prévu un écoulement d'évacuation d'huile (43) orienté vers le point le plus bas du fond de réservoir (41).
